(19) **Europäisches Patentamt**

**European Patent Office**

**Office européen des brevets**

(11) **EP 1 046 683 A2**

## (12) EUROPEAN PATENT APPLICATION

(43) Date of publication:
**25.10.2000 Bulletin 2000/43**

(51) Int. Cl.7: **C09D 5/44**, C08G 59/50

(21) Application number: **00108033.2**

(22) Date of filing: **20.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **22.04.1999 JP 11543999**

(71) Applicant:
**KANSAI PAINT CO., LTD.
Amagasaki-shi, Hyogo-ken 661-8555 (JP)**

(72) Inventors:
- **Hiraki, Tadayoshi
  Odawara-shi, Kanagawa-ken (JP)**
- **Soga, Toshiharu
  Atsugi-shi, Kanagawa-ken (JP)**
- **Tominaga, Akira
  Chigasaki-shi, Kanagawa-ken (JP)**

(74) Representative:
**Albrecht, Thomas, Dr. et al
Kraus, Weisert & Partner
Patent- und Rechtsanwälte
Thomas-Wimmer-Ring 15
80539 München (DE)**

(54) **Cationically electrodepositable coating method**

(57)     The present invention provides a cationically electrodepositable coating method characterized by immersing a conductive coated article in an electrodeposition bath comprising a cationically electrodepositable paint having a volatile organic solvent content of 0.5 % by weight or less in coating to electrodepositably coat it at a bath temperature of about 30 to about 45°C.

EP 1 046 683 A2

**Description**

The present invention relates to a cationically electrodepositable coating method using a so-called low VOC (volatile organic compounds) type cationically electrodepositable paint which does not contain at all a volatile organic solvent or if contains, only a very small amount.

A cationically electrodepositable paint is excellent in a throwing power and forms a coating film which is excellent in physical properties and a corrosion resistance and therefore is widely used as an under coat paint (primer) for car bodies and electric appliances. Usually, in order to secure a film thickness of 15 μm or more in a cured coating film and form a coating film having an excellent smoothness, this cationically electrodepositable paint contains volatile organic solvents of a monoalcohol base, a glycol base a cellosolve base and a ketone base so that a concentration thereof in an electrodepositable paint bath in coating is 2 % by weight or more. On the other hand, it comes to be strongly requested to reduce the content of these volatile organic solvents for the reasons of environmental pollution prevention and resource saving.

Accordingly, a content of organic solvents contained in a cationically electrodepositable paint in coating has so far been reduced simply to 0.5 % by weight, but if a cationically electrodepositable paint having such a low content of organic solvents is used for electrodepositable coating at a bath temperature of 26 to 28°C which is usually used, caused is the problem that it is difficult to obtain a coating film having a film thickness of 15 μm or more and that the coating film does not have a satisfactory smoothness.

In particular, if a cationically electrodepositable paint having such a low content of organic solvents is applied in a large amount on a steel panel (alloyed plated steel panel) coated with alloyed plating of zinc and iron which is used as a base material for a car body, there come out more markedly the problem that coating can not be carried out in such as a film thickness as described above and that the smoothness is not satisfactory. A thin electrodeposited coating film is not preferred because the corrosion resistance and the smoothness are inferior. On the other hand, if an applied voltage is elevated in order to apply an electrodepositable paint on an alloyed plated steel panel in a large film thickness, gas is notably produced and liable to produce pin holes in the coating film (this phenomenon is called "cratering") to reduce a smoothness on the coated surface. In order to improve a film forming property of an electrodeposited coating film and prevent cratering from being produced on an alloyed plated steel panel, it has so far been proposed to add low molecular weight compounds having a number average molecular weight of 1500 or less and hydrophilic resins to an electrodepositable paint bath. However, a coating film thickness is liable to change depending on a temperature of an electrodepositable paint bath and an applied voltage. In addition thereto, it is difficult to sufficiently prevent cratering from being produced.

An object of the present invention is to provide a coating method in which a coating film having a film thickness of 15 μm or more in a cured coating film and an excellent smoothness can be formed using a cationically electrodepositable paint having a volatile organic solvent content of 0.5 % by weight or less.

Intensive researches repeated by the present inventors have resulted in finding that the object described above can be achieved by controlling a temperature of a cationically electrodepositable paint bath in coating to about 30 to about 45°C, and they have come to complete the present invention.

Thus, according to the present invention, provided is a cationically electrodepositable coating method characterized by immersing a conductive coated article in an electrodepositable bath comprising a cationically electrodepositable paint having a volatile organic solvent content of 0.5 % by weight or less in coating to electrodepositable-paint it at a bath temperature of about 30 to about 45°C. In particular, the thick film-coating property and the smoothness of the coating film can further be improved by adding a surfactant having a specific HLB to this cationically electrodepositable paint.

The cationically electrodepositable paint (A) used in the present invention shall not specifically be restricted as long as the organic solvent content in coating can be controlled to 0.5 % by weight or less, and conventionally known ones can be used. It includes, for example, a cationically electrodepositable paint comprising an aqueous dispersion or an aqueous solution of a resin for a cationically electrodepositable paint as a principal component and suitably containing, if necessary, a cross-linking agent, a color pigment, a corrosion preventive pigment, an extender pigment, an acid for neutralizing a resin for a cationically electrodepositable paint, a cissing preventive, a catalyst, an inhibitor, a rheology controlling agent and a pigment dispersant.

Resins having a cross-linkable functional group such as a hydroxyl group and a cationic group in combination in a molecule can be used as the resin for a cationically electrodepositable paint, and suitable for a resin skeleton thereof are, for example, an epoxy resin, an acryl resin, polybutadiene, an alkyd resin and a polyester resin. Among them, a polyamine resin obtained by adding an amine compound to an epoxy resin has a good corrosion resistance and therefore is particularly suited as the resin for a cationically electrodepositable paint.

Such polyamine resin includes, for example, an adduct of an epoxy resin with primary mono- or polyamine, secondary mono- or polyamine or primary and secondary mixed polyamine (refer to, for example, U.S. Patent 3984299); an adduct of an epoxy resin with secondary mono- or polyamine having a primary amino group which in reduced to ketimine (refer to, for example, U.S. Patent 4017438); and an ether compound of an epoxy resin and a hydroxyl compound having a primary amino group which is reduced to ketimine (refer to, for example, Japanese Patent Application Laid-Open No. 43013/1984).

Epoxy resins which are obtained by reacting polyphenol compounds with epichlorohydrin and which have a number average molecular weight falling in a range of 400 to 4000, particularly 800 to 2000 and an epoxy equivalent falling in a range of 190 to 2000, particularly 400 to 1000 are suited as the epoxy resin to which an amine compound can be added. The polyphenol compound which can be used for producing such epoxy resin includes, for example, bis(4-hydroxyphenyl)-2,2-propane, 4,4-dihydroxybenzophenone, bis(4-hydroxyphenyl)-1,1-ethane, bis(4-hydroxyphenyl)-1,1-isobutane, bis(4-hydroxy-tert-butylphenyl)-2,2-propane, bis(2-hydroxynaphthyl)-methane, 1,5-dihydroxynaphthalene, bis(2,4-dihydroxyphenyl)-methane, tetra(4-hydroxyphenyl)-1,1,2,2-ethane, 4,4-dihydroxy-diphenyl sulfone, phenol novolak and cresol novolak.

Capable of being further used as the epoxy resin described above are those reacted with glycols, triols, polyetherpolyols, polyesterpolyols, polyamidepolyamines, polycarboxylic acids and polyisocyanate compounds, and those graft-polymerized with e-caprolactone and acryl base monomers.

Cationic groups such as a secondary amino group, a tertiary amino group and a quaternary ammonium salt group can be introduced into the epoxy resins by addition-reacting epoxy groups contained in these epoxy resins with amine compounds such as secondary amines, tertiary amines and polyamines, whereby cationic group-containing resins can be prepared.

These resins for a cationically electrodepositable paint can be reduced to water-soluble or water-dispersible ones by neutralizing with water-soluble organic acids such as formic acid, acetic acid and lactic acid.

In order to cross-link and cure a coating film which is electrodepositably coated, the resin for a cationically electrodepositable paint is preferably used in combination with a curing agent. Those which can be reacted with a cross-linkable functional group such as a hydroxyl group contained in the resin far a cationically electrodepositable paint can be used as the curing agent and include, for example, blocked polyisocyanate compounds and amino resins. A use ratio of the curing agent to the resin for a cationically electro-depositable paint is variable depending on the kind thereof. In general, the resin for a cationically electrodepositable paint falls suitably in a range of 50 to 90 %, particularly 65 to 80 % based on the total solid matter weight thereof, and the curing agent falls suitably in a range of 50 to 10 %, particularly 35 to 20 %. Further, the resin for a cationically electrodepositable paint can be turned into a self-curing type by adding and introducing a partially blocked polyisocyanate compound into a part of a cross-linkable functional group contained therein.

The color pigment includes, for example, inorganic pigments such as titanium oxide, zinc white, carbon black and red iron oxide but shall not be restricted only to them.

The corrosion preventive pigment includes, for example, zinc powder, zinc phosphate, calcium phosphate, aluminum phosphate, aluminum tripolyphosphate, aluminum orthophosphate, calcium orthophosphate, boric acid base corrosion preventive pigments, complex oxides (for example, complexes of alkaline earth metals with zinc oxide and iron oxide), tangstic acid base corrosion preventive pigments, phosphorous acid base corrosion preventive pigments, hypophosphorous acid base corrosion preventive pigments, nitrous acid base corrosion preventive pigments, vanadic acid base corrosion preventive pigments, zinc formate, zinc nitrate, zinc acetate, zinc octeate, and zirconium base compounds (for example, zirconium dioxide, zirconium silicate and zirconium hydroxide).

Further, there can be used as the corrosion preventive pigment, for example, bismuth base compounds such as bismuth hydroxide, bismuth trioxide, bismuth nitrate, bismuth benzoate, bismuth citrate, bismuth oxycarbonate and bismuth silicate; and bismuth compounds such as aliphatic carboxylic acid-modified bismuth compounds prepared by reacting a basic bismuth compounds such as bismuth oxide, bismuth hydroxide and basic bismuth carbonate with an aliphatic carboxylic acid represented by a formula $R^1$-CH(O-$R^2$)-(CH$^2$)$_n$-COOH (wherein $R^1$ represents a hydrogen atom or an alkyl group having 1 to 3 carbon atoms; $R^2$ represents a hydrogen atom or an alkyl group having 1 to 10 carbon atoms; and n represents 0 or 1). These bismuth compounds have a low toxicity as compared with those of lead base compounds which have so far been used and are excellent in a corrosion resistance, and lead base compounds can be avoided from being contained by using these bismuth compounds.

The aliphatic carboxylic acid represented by the formula described above includes, for example, aliphatic hydroxycarboxylic acids such as hydroxyacetic acid, lactic acid and hydroxypropionic acid, and aliphatic alkoxycarboxylic acids such as methoxyacetic acid, ethoxyacetic acid and 3-methoxypropionic acid. The aliphatic carboxylic acid-modified bismuth compound can be obtained by mixing and dispersing both components described above in a water base medium. It is preferably used in the form of a water dispersion paste which is present usually in a non-water soluble state. A use amount of the aliphatic carboxylic acid falls preferably in a range of 0.25 to 2.5, particularly 0.5 to 1.7 in terms of a mole ratio based on the amount of bismuth contained in the basic bismuth compound.

Further, compounds such as $Mg_4Al_2(OH)_{12}CO_3 \cdot 3H_2O$, $Mg_6Al_2(OH)_{16}CO_3 \cdot 5H_2O$ and $Mg_6Al_7(OH)_{16}$ $CO_3 \cdot 4H_2O$ can also be used as the corrosion preventive pigment.

The extender pigment includes, for example, calcium carbonate, kaolin, clay, diatomaceous earth, silicic acid hydrate, talc, barite, barium sulfate, barium carbonate, silica, glass beads and mica.

A blending amount of these corrosion preventive pigments and extender pigments can optionally be selected according to uses of the painted articles. In general, it falls suitably in a range of 0.5 to 100 parts by weight, particularly 15 to 50 parts by weight respectively per 100 parts by weight of the resin for a cationically electrodepositable paint.

There can further be added to the cationically electrodepositable paint (A), in addition to the compounds described above, if necessary, organic tin oxides such as dibutyltin oxide and dioctyltin oxide; and organic tin compounds such as aliphatic or aromatic carboxylic acid salts of dialkyltin including dibutyltin dilaurate, dioctyltin dilaurate, dibutyltin diacetate, dioctyltin benzaateoxy, dibutyltin benzoateoxy, dioctyltin dibenzoate and dibutyltin dibenzoate, and this can accelerate a curing property of the coating film. An addition amount of these organic tin compounds is usually 0 to 10 parts by weight particularly, 0.05 to 5 parts by weight based on metal tin per 100 parts by weight (solid matter) of the resin for a cationically electrodepositable paint.

The thick film-coating property and the smoothness of the coating film can further be improved by adding a nonionic surfactant (B) having an HLB of 2 to 8, particularly 2 to 6 to the cationically electrodepositable paint (A) used in the method of the present invention.

An HLB (hydrophile-lipophile balance) of a surfactant shows a balance between a hydrophilic property and a lipophilic property of the surfactant, and almost all surfactants are included in a range of 0 to 20. The smaller this value becomes, the more the lipophilic property (hydrophobic property) is shown. The nonionic surfactant having "an HLB of 2 to 8" used in the present invention is a nonionic material having a relatively large lipophilic property of such an extent that it is dispersed in a milky state by slightly dispersing in water or stirring strongly.

An HLB of a nonionic surfactant can be calculated based on a simple computational equation and can be determined according to, for example, i) in the case of a surfactant comprising an ester of polyhydric alcohol and a fatty acid, $HLB = 20(1-S/A)$ (in the equation, S is a saponification value of the ester, and A is an acid value of the fatty acid), ii) in the case of a surfactant of a polyoxyethylene alkyl ether base, $HLB = (E + P)/5$ (in the equation, E is a percentage by weight of an oxyethylene group, and P is a percentage by weight of the polyhydric alcohol, iii) in the case of a surfactant containing only a polyoxyethylene group as a hydrophilic group, $HLB = E/5$ (in the equation, E is a percentage by weight of an oxyethylene group).

The nonionic surfactant having an HLB falling in the range described above includes, for example, surfactants of a polyoxyethylene alkyl ether base, a polyoxyethylene alkylaryl ether base, a sorbitan derivative base and an acetylenediol base. Surfactants which are liquid at a room temperature are preferred, but solid or semi-solid ones can be used as well. Commercial products such as "SURFYNOL 420" and "SURFYNOL 440" (trade names) manufactured by Air Products Japan, Inc. and "Newcol 561H" (trade name) manufactured by Nihon Nyukazai Co., Ltd. can be used for such nonionic surfactant.

In the surfactant (B), if the surfactants having an HLB of smaller than 2 are used, it becomes impossible to homogeneous mix and disperse them in the cationically electrodepositable paint (A), and the stability thereof is reduced. On the other hand, if the surfactants having an HLB of larger than 8 are used, there is the possibility that the electrodeposited coating film is reduced in a film-forming property (thick film-coating property) to make it difficult to control the film thickness, so that an effect exerted by adding the nonionic surfactant can not sufficiently be displayed. Further, in the present invention, if an anionic or cationic surfactant is added to the cationically electrodepositable paint (A) in place of the nonionic surfactant (B), it becomes difficult to control the film thickness by electrodepositable coating, and a finish appearance of the formed coating film tends to be reduced.

A blending amount of the nonionic surfactant (B) to the cationically electrodepositable paint (A) shall not strictly be restricted and falls preferably in a range of usually 0.15 to 15 parts by weight, particularly 2 to 10 parts by weight based on 100 parts by weight of the resin solid matter contained in the cationically electrodepositable paint (A).

The nonionic surfactant (B) is preferably mixed in advance with the resin (the cationic group-containing resin) for a cationically electrodepositable paint together with a cross-linking agent a catalyst and the like. Usually, an organic acid is added to this mixture to neutralize the above resin, and then an aqueous medium is added to emulsify it, whereby they can be homogeneously mixed and dispersed.

In the method of the present invention, in order to control the volatile organic solvent content to 0.5 % by weight or less, preferably 0.4 % by weight or less in coating the cationically electrodepositable paint, the resin for a cationically electrodepositable paint is mixed together with the cross-linking agent the catalyst and the nonionic surfactant (B) in the manner described above, and an organic acid is further added to neutralize the mixture; water is added to emulsify the mixture to obtain an electrodepositable paint; and it is treated at a reduced pressure to vaporize and remove the volatile organic solvent contained therein. In order to facilitate removal of the organic solvent by this treatment at a reduced pressure, organic solvents having a low boiling point for example, 120°C or lower such as isopropyl alcohol, methyl ethyl ketone, methyl isobutyl ketone and the like are preferably used as the organic solvent in producing the resin for a cationically electrodepositable paint. The organic solvent is removed preferably at a reduced pressure of usually -700 mm Hg or less.

The cationically electrodepositable paint in which a volatile organic solvent content has been controlled in the manner described above so that it falls in a range of 0.5 % by weight or less in coating can be coated in a film thickness of about 15 μm or more in the cured coating film by controlling a bath temperature in coating to about 30 to about 45°C, preferably about 34 to about 40°C, and in addition thereto, the coating film formed has an excellent smoothness. In particular, when such cationically electrodepositable paint is coated on an alloyed plated steel panel, an electrodeposited coating film which is excellent in a thick film-coating property and a smoothness and in which cratering is not observed to be produced can be formed by electrodepositably coating it at the bath temperature described above. These actions and effects can notably be improved furthermore by adding the nonionic surfactant (B) having an HLB of 2 to 8 to the electrodepositable paint.

Usually, the cationically electrodepositable paint is diluted with deionized water so that the solid matter content thereof becomes about 5 to about 40 % by weight particularly 15 to 30 % by weight, and the volatile organic solvent content in coating is controlled so that it becomes 0.5 % by weight or less, preferably 0.4 % by weight or less; further, the pH is controlled to 5.5 to 9.0, particularly 6 to 8.5 to prepare an electrodeposition bath, and the bath temperature is controlled to about 30 to about 45°C, particularly about 34 to about 40°C; and a conductive coated article is immersed therein as a cathode on a condition of a loaded voltage of 100 to 400 V, and an electric current is applied, whereby the cationically electrodepositable coating method of the present invention can be carried out. Even when an alloyed plated steel panel is used as the coated article, the electrodepositable coating can be carried out on the same conditions, and the coating film which is excellent in a smoothness and a corrosion resistance can be formed. In addition thereto, the throwing power and the thick film-coating property are good as well. After applying an electric current, the coated article is pulled up from the electrodeposition bath and washed with water, followed by heating at about 100 to about 200°C, preferably about 150 to about 180°C for 10 to 40 minutes, whereby the coating film can be cured.

The coating film formed by carrying out electrodepositable coating using a cationically electrodepositable paint bath prepared by controlling the volatile organic solvent content in the electrodeposition bath in coating to a range of 0 to 0.5 % by weight, preferably 0 to 0.4 % by weight and the electrodeposition bath temperature in coating to a range of about 30 to about 45°C, preferably about 34 to about 40°C has a good throwing power and can be coated in a thick film of 15 μm or more in a cured coating film. Further, also when coating is carried out on an alloyed plated steel panel by this method, cratering is not produced, and coating can be carried out in a thick film of 15 μm or more in the cured coating film.

Thus, according to the method of the present invention, use of the cationically electrodepositable paint in which a volatile organic solvent content in coating is controlled so that it becomes 0.5 % by weight or less makes it possible to form an electrodepositable coating film which is improved in a throwing power, a corrosion property, a smoothness and a thick film-coating property, and a reduction in VOC can be achieved.

The present invention shall more specifically be explained below with reference to examples and comparative examples. However, they are given merely as examples, and the present invention shall not be restricted only to them. Parts and percentage mean parts by weight and % by weight unless otherwise described, and a film thickness of a coating film is based on a cured coating film.

1. Sample

Resin vanish for a cationically electrodepositable paint:

Dissolved in 1012 parts of methyl isobutyl ketone (boiling point: 116°C) was 1900 parts of "Epon 1004" (trade name, manufactured by Yuka Shell Co., Ltd., biephenol A type epoxy resin, epoxy equivalent about 950), and the solution was heated to 80 to 100°C. Then, 124 parts of diethylamine was dropwise added, and the solution was maintained at 110°C for 2 hours to obtain an amine-added epoxy resin having an amine value of 47. On the other hand, 1000 parts of a dimer acid type polyamide resin having an amine value of 100 ("Versamide 460", trade name, manufactured by Henkel Hakusui Corporation) was dissolved in 429 parts of methyl isobutyl ketone, and the solution was refluxed by heating at 130 to 150°C to distil off produced water to obtain the polyamide resin having a terminal amino group which was reduced to ketimine. It was maintained at 150°C for about 3 hours, and after distillation of water was stopped, it was cooled down to 60°C. Then, this was added to the amine-added epoxy resin described above, and the mixture was heated to 100°C and maintained for one hour, followed by cooling it down to a room temperature to obtain a vanish of an amine-added epoxy resin-polyamide-modified resin (resin vanish for a cationically electrodepositable paint) having a solid matter content of 68 % and an amine value of 65.

2. Examples and comparative examples

Example 1

Homogeneously mixed were 103 parts (70 parts in terms of a resin nonvolatile) of the resin vanish for a cationically electrodepositable paint, 30 parts of a 2-ethylhexyl alcohol-blocked product of tolylenediisocyanate and 15 parts of a 10 % acetic acid aqueous solution, and then 146 parts of deionized water was dropwise added in about 15 minutes while strongly stirring to obtain an emulsion having a nonvolatile content of 34 % for a cationically electrodepositable paint. Subsequently, this emulsion was subjected to "desolvent" under reduced pressure (-760 mm Hg) at 30 to 40°C so that a content of methyl isobutyl ketone in the finished cationically electrodepositable paint became 0.5 % or less. Thereafter, 71.4 parts of a pigment paste (remark 1) was added while stirring to 294 parts of the emulsion obtained by adding deionized water of the same amount as the total amount of methyl isobutyl ketone and water which were removed by the desolvent described above and, it was further diluted with deionized water to obtain a cationically electrodepositable paint (a) which was free of lead and had a nonvolatile content of 20 % (the above paint did not contain the nonionic surfactant (B) having an HLB of 2 to 8).

A bath temperature of this cationically electrodepositable paint (a) was controlled to 38°C, and a steel panel (a coated article) subjected to degreasing and zinc phosphate treatments was immersed therein as a cathode. Then, an electric current was applied at a loaded voltage of 250 V for 180 seconds to subject the above steel panel to cationically electrodepositable coating, and it was pulled up and washed with water, followed by heating at 170°C for 30 minutes to cure the coating film.

(Remark 1) pigment paste: a dispersion comprising 5 parts (3.4 parts in terms of a resin nonvolatile) of a vanish for a cationically electrodepositable paint 2.6 parts of a 10 % acetic acid aqueous solution, 15 parts of titanium oxide, 2 parts of bismuth hydroxide, 8 parts of refined clay, 2 parts of dioctyltin oxide, 0.3 part of carbon black and 36.5 parts of deionized water; nonvolatile content: 43 %.

Example 2

Homogeneously mixed were 103 parts (70 parts in terms of a resin nonvolatile) of the resin vanish for a cationically electrodepositable paint, 30 parts of a 2-ethylhexyl alcohol-blocked product of tolylenediisocyanate, 2 parts (nonvolatile) of "Surfinol 420" (trade name, an acetylenediol base nonionic surfactant having an HLB of 4, manufactured by Air Products Japan Co., Ltd.) and 15 parts of a 10 % acetic acid aqueous solution, and then 150 parts of deionized water was dropwise added in about 15 minutes while strongly stirring to obtain an emulsion having a nonvolatile content of 34% for a cationically electrodepositable paint. Subsequently, this emulsion was subjected to "desolvent" under reduced pressure (-760 mm Hg) at 30 to 40°C so that a content of methyl isobutyl ketone in the finished cationically electrodepositable paint became 0.5 % or less. Thereafter, 71.4 parts of the pigment paste (remark 1) was added while stirring to 300 parts of the emulsion obtained by adding deionized water of the same amount as the total amount of methyl isobutyl ketone and water which were removed by the desolvent described above and further, it was diluted with deionized water to obtain a cationic cationically electrodepositable paint (b) which was free of lead and had a nonvolatile content of 20 %.

A bath temperature of this cationically electrodepositable paint (b) was controlled to 36°C, and a steel panel (a coated article) subjected to degreasing and zinc phosphate treatments was immersed therein as a cathode. Then, an electric current was applied at a loaded voltage of 250 V for 180 seconds to subject the above steel panel to cationically electrodepositable coating, and it was pulled up and washed with water, followed by heating at 170°C for 30 minutes to cure the coating film.

Example 3

Homogeneously mixed were 103 parts (70 parts in terms of a resin nonvolatile) of the resin vanish for a cationically electrodepositable paint, 30 parts of a 2-ethylhexyl alcohol blocked product of tolylenediisocyanate, 5 parts (nonvolatile) of "Surfinol 420" (trade name, an acetylenediol base nonionic surfactant having an HLB of 4, manufactured by Air Products Japan Co., Ltd.) and 15 parts of a 10 % acetic acid aqueous solution, and then 156 parts of deionized water was dropwise added in about 15 minutes while strongly stirring to obtain an emulsion having a nonvolatile content of 34 % for a cationically electrodepositable paint. Subsequently, this emulsion was subjected to "desolvent" under reduced pressure (-760 mm Hg) at 30 to 40°C so that a content of methyl isobutyl ketone in the finished cationically electrodepositable paint became 0.5 % or less. Thereafter, 71.4 parts of the pigment paste (remark 1) was added while stirring to 309 parts of the emulsion obtained by adding deionized water of the same amount as the total amount of methyl isobutyl ketone and water which were removed by the desolvent described above and, it was further diluted with deionized water to obtain a cationically electrodepositable paint (c) which was free of lead and had a nonvolatile content of 20 %.

A bath temperature of this cationically electrodepositable paint (c) was controlled to 34°C, and a steel panel (a coated article) subjected to degreasing and zinc phosphate treatments was immersed therein as a cathode. Then, an electric current was applied at a loaded voltage of 250 V for 180 seconds to subject the above steel panel to cationically electrodepositable coating, and it was pulled up and washed with water, followed by heating at 170°C for 30 minutes to cure the coating film.

Example 4

Homogeneously mixed were 103 parts (70 parts in terms of a resin nonvolatile) of the resin vanish for a cationically electrodepositable paint, 30 parts of a 2-ethylhexyl alcohol-blocked product of tolylenediisocyanate, 2 parts (nonvolatile) of "Newcol 561H" (trade name, an alkylaryl ether base nonionic surfactant having an HLB of 3.3, manufactured by Nippon Nyukazai Co., Ltd.) and 15 parts of a 10 % acetic acid aqueous solution, and then 150 parts of deionized water was dropwise added in about 15 minutes while strongly stirring to obtain an emulsion having a nonvolatile content of 34 % for a cationically electrodepositable paint. Subsequently, this emulsion was subjected to "desolvent" under reduced pressure (-760 mm Hg) at 30 to 40°C so that a content of methyl isobutyl ketone in the finished cationically electrodepositable paint became 0.5 % or less. Thereafter, 71.4 parts of the pigment paste (remark 1) was added while stirring to 300 parts of the emulsion obtained by adding deionized water of the same amount as the total amount of methyl isobutyl ketone and water which were removed by the desolvent described above and, it was further diluted with deionized water to obtain a cationically electrodepositable paint (d) which was free of lead and had a nonvolatile content of 20 %.

A bath temperature of this cationically electrodepositable paint (d) was controlled to 36°C, and a steel panel (a coated article) subjected to degreasing and zinc phosphate treatments was immersed therein as a cathode. Then, an electric current was applied at a loaded voltage of 250 V for 180 seconds to subject the above steel panel to cationically electrodepositable coating, and it was pulled up and washed with water, followed by heating at 170°C for 30 minutes to cure the coating film.

Comparative Example 1

Homogeneously mixed were 103 parts (70 parts in terms of a resin nonvolatile) of the resin vanish for a cationically electrodepositable paint, 30 parts of a 2-ethylhexyl alcohol-blocked product of tolylenediisocyanate, 4.4 parts of butyl cellosolve and 15 parts of a 10 % acetic acid aqueous solution, and then 141.6 parts of deionized water was dropwise added in about 15 minutes while strongly stirring to obtain an emulsion having a nonvolatile content of 34 % for a cationically electrodepositable paint. Subsequently, this emulsion was subjected to "desolvent" under reduced pressure (-760 mm Hg) at 30 to 40°C so that a content of methyl isobutyl ketone in the finished cationically electrodepositable paint became about 2 %. Thereafter, 71.4 parts of the pigment paste (remark 1) was added while stirring to 294 parts of an emulsion obtained by adding deionized water of the same amount as the total amount of methyl isobutyl ketone and water which were removed by the desolvent described above and, it was further diluted with deionized water to obtain a cationically electrodepositable paint (e) which was free of lead and had a nonvolatile content of 20 %.

A bath temperature of this cationically electrodepositable paint (e) was controlled to 28°C, and a steel panel (a coated article) subjected to degreasing and zinc phosphate treatments was immersed therein as a cathode. Then, an electric current was applied at a loaded voltage of 250 V for 180 seconds to subject the above steel panel to cationically electrodepositable coating, and it was pulled up and washed with water, followed by heating at 170°C for 30 minutes to cure the coating film.

Comparative Example 2

A bath temperature of the cationically electrodepositable paint (e) described above was controlled to 36°C, and a steel panel (a coated article) subjected to degreasing and zinc phosphate treatments was immersed therein as a cathode. Then, an electric current was applied at a loaded voltage of 250 V for 180 seconds to subject the above steel panel to cationically electrodepositable coating, and it was pulled up and washed with water, followed by heating at 170°C for 30 minutes to cure the coating film.

Comparative Example 3

A bath temperature of the cationically electrodepositable paint (a) described above was controlled to 28°C, and a steel panel (a coated article) subjected to degreasing and zinc phosphate treatments was immersed therein as a cathode. Then, an electric current was applied at a loaded voltage of 250 V for 180 seconds to subject the above steel panel to cationically electrodepositable coating, and it was pulled up and washed with water, followed by heating at 170°C for 30 minutes to cure the coating film.

3. Performance test results

The cationically electrodepositable paints (a) to (e) used in the examples and the comparative examples were subjected to performance tests of a content of the volatile organic solvent, a throwing power, a film-forming property, a smoothness, a cratering property and a corrosion resistance. The results thereof are shown in Table 1.

Table 1

| | Example | | | | Comparative example | | |
|---|---|---|---|---|---|---|---|
| | 1 | 2 | 3 | 4 | 1 | 2 | 3 |
| Cationically electrodepositable paint | a | b | c | d | e | e | a |
| Organic solvent content | 0.35 | 0.35 | 0.35 | 0.35 | 2.2 | 2.2 | 0.35 |
| Electrodepositable paint bath temperature | 38 | 36 | 34 | 36 | 28 | 36 | 28 |
| Throwing power | ○ | ○ | ○ | ○ | ○ | X | X |
| Film-forming property | ○ | ○ | ○ | ○ | ○ | ○ | X |
| Smoothness | ○ | ○ | ○ | ○ | ○ | △ | X |
| Cratering property | ○ | ○ | ○ | ○ | ○ | ○ | X |
| Corrosion resistance | ○ | ○ | ○ | ○ | ○ | ○ | X |

The test methods are as follows.

Volatile organic solvent content:

The content of the whole organic solvents in the cationically electrodepositable paint having a nonvolatile content of 20 % was determined by means of gas chromatography.

Throwing power:

Four steel panels having a size of $70 \times 150 \times 0.8 \times$ mm subjected to degreasing and zinc phosphate treatments were prepared, and opening parts having a diameter of 8 mm were provided in the central parts of three panels out of them. The three steel panels having the opening parts were arranged at intervals of 20 mm so that they became more distant in order from a cathode side, and one steel panel having no opening part was disposed in the most distance position, wherein a distance between the frontest steel panel and the anode was set to 110 mm. An anode side of the steel panel provide with opening part which was in the closest position looking from the anode side was designated as an A face, and an anode side of the steel panel provide with no opening part which was in the most distant position was designated as a G face. A ratio of the thicknesses of the electrodepositable coating films on these G and A faces was measured (BOX method). The higher this film thickness ratio is, the better the throwing power (film thickness distribution) is. The cationically electrodepositable coating conditions are a voltage of 250 V and an electric current-applying time of 180 seconds. The mark ○ shows that the film thickness ratio in terms of G/A is 40 % or more; the mark △ shows that the film thickness ratio in terms of G/A is 20 to 40 %; and the mark X shows that the film thickness ratio in terms of G/A is 20 % or less.

Film-forming property:

A steel panel subjected to degreasing and zinc phosphate treatments was subjected to cationically electrodepositable coating at a loaded voltage of 250 V and an electric current-applying time of 180 seconds, and a film thickness of the coating film cured by heating at 170°C for 30 minutes was examined. The mark ○ shows that the film thickness is 20 μm or more; the mark △ shows that the film thickness is 15 to 20 μm; and the mark X shows that the film

thickness is 15 μm or less.

Smoothness:

A steel panel subjected to degreasing and zinc phosphate treatments was subjected to cationically electrodepositable coating at a loaded voltage of 250 V and an electric current-applying time of 180 seconds, and the coating film surface was cured by heating at 170°C for 30 minutes to visually judge it. The mark ◯ shows that the smoothness is good; the mark △ shows that the smoothness is a little inferior; and the mark X shows that the smoothness is very inferior.

Cratering property:

A steel panel subjected to degreasing and zinc phosphate treatments was used and subjected to cationically electrodepositable coating at a loaded voltage of 250 V and an electric current-applying time of 180 seconds, and the number of pin holes produced per 100 m$^2$ of the coated surface on the coating film cured by heating at 170°C for 30 minutes was examined. The mark ◯ shows that the pin holes are not produced; the mark △ shows that 5 to 10 pin holes are produced; and the mark X shows that 11 or more pin holes are produced.

Corrosion resistance:

A degreased, non-treated steel panel was subjected to cationically electrodepositable coating at a loaded voltage of 200 V and an electric current-applying time of 180 seconds, and the coating film was cured by heating at 180°C for 30 minutes (film thickness: 20 μm). Then, the coated steel panel which was crosscut so that the cutting reached the base was subjected to a salt spray tester for 480 hours, and then a condition of the coated surface was visually observed. The mark ◯ shows that virtually no peeling from the cross-cut part is observed; the mark △ shows that a little peeling from the crosscut part is observed; and the mark X shows that marked peeling from the crosscut part is observed.

**Claims**

1. A cationically electrodepositable coating method characterized by immersing a conductive coated article in an electrodeposition bath comprising a cationically electrodepositable paint having a volatile organic solvent content of 0.5 % by weight or less in coating to electrodepositably coat it at a bath temperature of about 30 to about 45°C.

2. The method as described in claim 1, wherein a temperature of the cationically electrodepositable paint bath is about 34 to about 40°C.

3. The method as described in claim 1, wherein the cationically electrodepositable paint contains a nonionic surfactant having an HLB of 2 to 8.

4. The method as described in claim 1, wherein the cationically electrodepositable paint contains the nonionic surfactant in an amount of 0.15 to 15 parts by weight per 100 parts by weight of the resin nonvolatile in contained in said electrodepositable paint.

5. The method as described in claim 1, wherein the conductive coated article is an alloyed plated steel panel.

6. The method as described in claim 1, wherein the coating film has a thickness of 15 μm or more in the cured coating film.

7. The method as described in claim 1, wherein the cationically electrodepositable paint further contains a bismuth compound and does not contain lead base compounds.